# EUROPÄISCHE PATENTSCHRIFT

(11) **EP 2 218 319 B1**
(45) Veröffentlichungstag und Bekanntmachung des Hinweises auf die Patenterteilung: **22.04.2015**
(21) Anmeldenummer: 10152401.5
(22) Anmeldetag: 02.02.2010
(51) Int. Cl.: A01D 34/33

(54) **Verbindungsanordnung zur Verbindung eines Mähmessers mit einem Mähmesserantriebszapfen**
Connection assembly for connecting a mow measurer with a mow measurer drive plug
Dispositif de liaison destiné à raccorder une lame de tondeuse et une cheville d'entraînement de lame de tondeuse

(30) Priorität: 13.02.2009 DE 102009008961; 17.02.2009 DE 102009000939
(43) Veröffentlichungstag der Anmeldung: 18.08.2010
(73) Patentinhaber: DEERE & COMPANY, Moline, Illinois 61265-8098 (US)
(72) Erfinder: Gil Martinez, Mónica, 28983, Madrid (ES); Herlyn, Ryan S, Port Byron, IL 61275 (US)
(74) Vertreter: Reichert, Christian

(56) Entgegenhaltungen:
- DE-A1- 3 701 397
- DE-A1-102006 010 825
- DE-C- 846 178
- DE-C1- 4 018 021

## Beschreibung

Die Erfindung betrifft eine Verbindungsanordnung zur Verbindung eines Mähmessers mit einem Mähmesserantriebszapfen, mit einem ringförmig ausgebildeten Verbindungselement, einer im Verbindungselement aufnehmbaren Lageranordnung zur Lagerung des Verbindungselements an einem Mähmesserantriebszapfen und einem am Verbindungselement befestigbaren Mähmesserträger.

Es sind Getriebeanordnungen bekannt, die in Mähmesserschneidwerken an Mähvorsätzen von Mähdreschern eingesetzt werden. Derartige Schneidwerke können Getriebeanordnungen umfassen, die über mehrere reihenartig angeordnete Exzentertriebe verfügen, wobei der Antrieb der Mähmesser eines Mähmesserschneidwerks durch exzentrisch rotierende Zapfen bzw. Mähmesserantriebszapfen am Exzentertrieb realisiert wird, wobei die exzentrische Rotationsbewegung des Mähmesserantriebszapfens in eine Linearbewegung für das Mähmesser überführt wird. Ein derartiger Exzentertrieb für ein Mähmesserschneidwerk ist beispielsweise in DE 10 2006 005 354 A1 offenbart.

Bei der Überführung der exzentrischen Rotationsbewegung des Mähmesserantriebszapfens in eine Linearbewegung für das Mähmesser sind besondere Verbindungsanordnungen erforderlich, die die zur Überführung notwendigen Eigenschaften aufweisen.

Eine derartige Verbindungsanordnung weist die DE 10 2006 010 825 A1 auf. Sie offenbart eine Verbindungsanordnung zwischen einem Mähmesserantrieb und einem linear hin- und hergehend bewegten Mähmesser, wobei ein ringförmiges, über den Umfang geschlitztes Verbindungselement ausgebildet ist. Das Verbindungselement nimmt wiederum einen ebenfalls auf seinem Umfang geschlitzten Zwischenring auf. Der Zwischenring umschließt dabei den Außenring eines Wälzlagers, wobei das Wälzlager radial auf dem Mähmesserantriebszapfen gehaltert ist. Das Verbindungselement ist an seinem Schlitz mit einer Spannschraube versehen, über die das Verbindungselement mit dem Zwischenring und dem Außenring des Wälzlagers verspannt wird. Das Verbindungselement stellt somit eine Spanneinrichtung dar. Das Verbindungselement ist einteilig mit dem Schaft eines Mähmesserträgers ausgebildet, wobei ein entsprechendes Mähmesser auf dem Mähmesserträger befestigbar ist. Die Innenfläche des Zwischenrings und die Außenfläche des Außenrings sind sphärisch ausgebildet und erlauben eine geringe einstellbare axiale Neigungsstellung des Zwischenrings relativ zur Rotationsachse des Wälzlagers, so dass der Mähmesserträger bzw. ein darauf befestigtes Mähmesser in seiner Neigungsposition zum Mähmesserantriebszapfen bzw. zur Rotationsachse des Wälzlagers justierbar ist. Es ist vorgesehen dass die Justierung durch Lösen der Spannschraube am Verbindungselement vorgenommen wird, so dass sich der Zwischenring gegenüber dem Außenring verstellen lässt. Nach der Justierung erfolgt das Verspannen des Verbindungselements mit dem Zwischenring bzw. dem Außenring des Wälzlagers, so dass das Verbindungselement und der Mähmesserantriebszapfen miteinander fest verbunden sind.

Die in DE 10 2006 010 825 offenbarte Verbindungsanordnung weist folgende Eigenschaften auf, die sich bei einem dauerhaften Betrieb des Mähmesserschneidwerks nachteilig auswirken können: Die geschlitzte Ausführung des Verbindungselements bzw. des Zwischenrings erschweren im erheblichen Maße die Abdichtung gegenüber der Umgebung, so dass eine Verschmutzung und regelmäßige Schmierung des Wälzlagers unvermeidlich ist. Dazu sind aufwändige Schmierungsbohrungen im Mähmesserantriebszapfen erforderlich. Die erforderliche Justierung des Mähmesserträgers erfolgt bei Montage der Verbindungsanordnung und ist während des Betriebs fest eingestellt. Dadurch ergeben sich schon bei leichten Betriebsspannungen am Mähmesserträger Verschleiß erzeugende Belastungen am Wälzlager, die dieses im überhöhten Maße im Betrieb axial belasten, wobei das Wälzlager als Radiallager ausgebildet ist. Durch die fest eingespannte Verbindung zwischen Verbindungselement und Mähmesserantriebszapfen über einen Zwischenring ist eine axiale Verschiebung bzw. Justierung des Verbindungselements relativ zu der Rotationsachse des Wälzlagers bzw. Längsmittelachse des Mähmesserantriebszapfens nur sehr eingeschränkt möglich. Nicht zuletzt weist die offenbarte Verbindungsanordnung eine hohe Teilevielfalt und einen entsprechenden Wartungsaufwand auf.

Die der Erfindung zugrunde liegende Aufgabe wird darin gesehen, eine Verbindungsanordnung der eingangs genannten Art anzugeben, durch welche die vorgenannten Nachteile teilweise oder ganz behoben werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß umfasst eine Verbindungsanordnung der eingangs genannten Art ein Verbindungselement, welches über den Umfang unterbrechungsfrei geschlossenen ausgebildet ist und einen zu einer Rotationsachse des Verbindungselements radial innenseitig sphärisch ausgeformten Lagerring formt, wobei die Lageranordnung eine zur Aufnahme in dem Lagerring radial außenseitig sphärisch ausgebildete Lagerbuchse umfasst und zur Befestigung des Mähmesserträgers an das Verbindungselement Befestigungsmittel vorgesehen sind, die an dem Verbindungselement radial außenseitig angreifen bzw. angeordnet sind. Das Verbindungselement ist über seinen Umfang geschlossen, d.h. ungeschlitzt ausgebildet und bietet dadurch einen die Lageranordnung umschließenden Lagerring mit unveränderbaren Durchmesser, wobei der Lagerring die Lagerbuchse ohne Spanneinrichtung umschließt. Durch die sphärisch ausgebildete Innenfläche des Lagerrings sowie die sphärisch ausgebildete Außenfläche der Lagerbuchse stehen Lagerring und Lagerbuchse direkt miteinander in Eingriff, so dass auf einen Zwischenring verzichtet werden kann. Der Innendurchmesser des Lagerrings sowie der Außendurchmesser der Lagerbuchse sind derart aufeinander abgestimmt, dass sich die Lagerbuchse radial unverspannt innerhalb des Lagerrings bewegen lässt, derart, dass die Position der Rotationsachse des Lagerrings gegenüber der Position der Rotationsachse der Lagerbuchse während des Betriebs des Mähmesserschneidwerks veränderbar ist. Dadurch werden Verschleiß erzeugende Belastungen an der Lageranordnung vermieden. Die geschlossene, ungeschlitzte Ausbildung des Verbindungselements ermöglicht eine rundum abschließende Abdichtung der Lageranordnung gegenüber der Umgebung, wodurch aufwändige Schmierungsvorkehrungen sowie Verunreinigungen der Lageranordnung zuverlässig und Dauerhaft vermieden werden können. Die geschlossene Ausbildung des Verbindungselements sorgt für eine Geometrie mit konstantem Außendurchmesser, so dass weitere Befestigungspunkte mit konstanter Geometrie in Form von Befestigungsbohrungen am Verbindungselement vorgesehen werden können. Durch die Befestigungsbohrungen am Verbindungselement können Mähmesserträger und Verbindungselement getrennt voneinander ausgebildet werden. So lässt sich der Mähmesserträger vom Verbindungselement trennen und gegenüber dem Verbindungselement zusätzlich variabel verstellen, wodurch insbesondere Montageaufwand und Justierung für den Mähmesserträger und damit für ein auf dem Mähmesserträger montierbares Mähmesser vereinfacht werden. Die Lagerbuchse ist auf ihrem Umfang ungeschlitzt ausgebildet und wird formschlüssig in dem Lagerring des Verbindungselements aufgenommen. Durch die sphärischen Ausformungen der Außenfläche der Lagerbuchse und der Innenfläche des Lagerrings sind Neigungsstellungen der Lagerbuchse relativ zum Lagerring möglich. Die Lagerbuchse ist vorzugsweise aus Metall, Kunststoff oder Keramik hergestellt und ist als ein gesondertes Bauteil der Lageranordnung, jedoch nicht als Teil eines Lagers selbst, beispielsweise eines Wälzlagers, zu verstehen. Die Lagerbuchse kann daher auch als einfache Buchse, oder als Führungsbuchse, Laufbuchse, Hülse oder dergleichen bezeichnet werden. Der Mähmesserträger wird vorzugsweise mit dem Verbindungselement über die Befestigungsbohrungen verschraubt.

Der am Verbindungselement ausgebildete Lagerring umfasst zum Einsetzen der Lagerbuchse auf dem Umfang um 180° versetzt angeordnete Ausnehmungen. Die Ausnehmungen sind an den Rändern der sphärischen Innenfläche ausgebildet, derart, dass die Lagerbuchse in einer um 90° zu ihrer Lagerposition verdrehten bzw. gekippten Stellung in den Lagerring einsetzbar ist. Durch erneutes Verdrehen der Lagerbuchse um 90° nach Einsetzen in den Lagerring wird die Lagerbuchse formschlüssig in dem Lagerring aufgenommen, so dass die Außenfläche der Lagerbuchse und die Innenfläche des Lagerrings zusammenkommen und miteinander ein sphärisches Lagerflächenpaar bilden. Durch die Ausnehmungen am Lagerring wird ein Einsetzen der Lagerbuchse ermöglicht, ohne dass weder der Lagerring noch die Lagerbuchse jeweils auf ihrem Umfang geschlitzt bzw. geöffnet werden muss und jeweils eine geschlossene Kontur bzw. Form und damit auch geschlossene Lagerflächen bilden.

Die Lageranordnung umfasst einen von der Lagerbuchse radial innen aufgenommenen Außenring eines Wälzlagers. Das Wälzlager weist einen Innenring und einen Außenring auf und ist beispielsweise als radiales Zylinderrollenlager mit zylindrischer Außenfläche am Außenring und zylindrischer Innenfläche an einem Innenring ausgebildet. Das Wälzlager wird von einer zylindrischen Innenfläche der Lagerbuchse aufgenommen. Unter dem Begriff Wälzlager ist ebenfalls ein Kugellager, Kegelrollenlager oder Nadelrollenlager zu verstehen, die hier alternativ zum Einsatz kommen könnten. Anstelle des Wälzlagers könnte auch ein entsprechend verschleißfest ausgebildetes Gleitlager eingesetzt werden.

Das Wälzlager ist auf einem Mähmesserantriebszapfen gelagert bzw. gehaltert, wobei der Mähmesserantriebszapfen ebenfalls entsprechend der Innenfläche des Innenrings des Wälzlagers, zylindrisch ausgebildet ist.

An dem Verbindungselement ist eine Abdeckung vorgesehen, die den Lagerring an dem freiliegenden Ende eines Mähmesserantriebszapfens relativ zur Rotationsachse axial verschließt und Lageranordnung sowie einen Mähmesserantriebszapfen gegenüber der Umgebung diesseits des Lagerrings vollständig abdeckt. Die Abdeckung ist in Form eines kreisförmigen Deckels ausgebildet, der in eine am Rand des Lagerrings ausgebildete zylindrische Öffnung des Verbindungselements bzw. einem am Verbindungselement ausgebildeten zylindrischen Rand oder Kranz eingesetzt oder aufgesetzt wird. Der Deckel ist aus einer mit Gummi oder Kunststoff überzogenen Metallplatte ausgebildet, wobei auch die Ausbildung mit nur einem der Materialien möglich ist. Durch eine entsprechende Passung, vorzugsweise Presspassung, zwischen Deckel bzw. Deckelrand und der Öffnung am Verbindungselement wird eine Abdichtung der Lageranordnung gegenüber der Umgebung hergestellt.

Auf der entgegen gesetzten Seite der Lageranordnung bzw. der in axialer Richtung zum Mähmesserantriebszapfen der Abdeckung abgewandten Seite der Lageranordnung sind Dichtmittel vorgesehen, die die Lageranordnung auf der der Abdeckung abgewandten Seite des Lagerrings, also am Fuße eines Mähmesserantriebszapfens gegenüber der Umgebung abdichten. Die Dichtmittel sind derart angeordnet, dass sie sich zwischen einem Mähmesserantriebszapfen und einer am anderen Rand des Lagerrings ausgebildeten zylindrischen Öffnung des Verbindungselements bzw. einem dort am Verbindungselement ausgebildeten zylindrischen Rand oder Kranz erstrecken, so dass dadurch die Lageranordnung auch auf der anderen Seite des Lagerrings, also am nicht freiliegenden Ende eines Mähmesserantriebszapfens bzw. an seinem Fuße, axial verschlossen wird. Dadurch werden Lageranordnung sowie Mähmesserantriebszapfen gegenüber der Umgebung vollständig abgedichtet.

Die Dichtmittel umfassen einen ersten Dichtring und einen zweiten Dichtring. Der erste Dichtring ist an einem Mähmesserantriebszapfen und der zweite Dichtring an dem Verbindungselement bzw. am Lagerring gehaltert. Beide Dichtringe weisen zusammen einen gemeinsamen radialen Überlappungsbereich auf, wobei der zweite Dichtring radial außen liegend zum ersten Dichtring angeordnet ist. Der erste Dichtring weist eine sphärische Außenfläche auf, die von einem am zweiten Dichtring ausgebildeten Rand oder Dichtungsrand überlappt wird. In einer Grundstellung sind beide Dichtringe koaxial zueinander ausgerichtet. Bei einer Neigungsstellung der beiden Dichtringe zueinander kann sich der Rand des zweiten Dichtrings auf der sphärisch ausgebildeten Außenfläche des ersten Dichtrings bewegen, ohne dass ein Öffnungsspalt zwischen den beiden Dichtringen entsteht. Der erste Dichtring ist vorzugsweise aus Metall hergestellt und in einer Presspassung am Schaft bzw. Fuße eines Mähmesserantriebszapfens gehaltert. Ebenso kann der erste Dichtring auch aus einem Kunststoff oder einem gummiartigen Material hergestellt sein. Der zweite Dichtring umfasst vorzugsweise einen aus einem Kunststoff oder einem gummiartigen Material hergestellten Innenring, der in einen äußeren Trägerring eingepasst ist, wobei der Trägerring vorzugsweise aus Metall hergestellt ist. Der Trägerring ist in eine am Rand des Lagerrings ausgebildete zylindrische Öffnung des Verbindungselements bzw. einem am Verbindungselement ausgebildeten zylindrischen Rand oder Kranz eingesetzt oder aufgesetzt.

Die Befestigungsmittel können Befestigungsbohrungen, die radial außen an dem Verbindungselement ausgebildet sind, umfassen. Dazu können an dem Verbindungselement Vorsprünge oder Verstärkungen bzw. Befestigungsaugen oder dergleichen ausgebildet sein, an denen entsprechende Bohrungen zur Befestigung des Mähmesserträgers angeordnet sind.
Der Mähmesserträger weist einen Befestigungsflansch auf, mit welchem der Mähmesserträger an die Befestigungsbohrungen des Verbindungselements anschraubbar ist. Der Befestigungsflansch weist Gewindebohrungen auf, die fluchtend mit den Befestigungsbohrungen am Verbindungselement angeordnet sind. Der Befestigungsflansch ist vorzugsweise einstückig mit einem mit Mähmesser bestückbaren Schaft des Mähmesserträgers verbunden.

Die Befestigungsbohrungen des Verbindungselements sind als Langlochbohrungen ausgebildet, derart, dass der Mähmesserträger mit seinem Flansch axial zur Rotationsachse des Verbindungselements verstellbar anschraubbar ist. Durch unterschiedliche Stellungen der Gewindebohrungen zu den Langlochbohrungen am Flansch des Mähmesserträgers können Verschiebungen des Mähmesserträgers vorgenommen werden, wodurch eine Justierung des Mähmesserträgers axial zum Mähmesserantriebszapfen realisierbar ist. Der Flansch wird vorzugsweise über Gewindebolzen, die sich durch die Langlochbohrungen erstrecken, an das Verbindungselement angeschraubt. Von Vorteil dabei ist, dass die Montage des Verbindungselements mit Lageranordnung an einem Mähmesserantriebszapfen unabhängig von einer Justierung des Mähmesserträgers erfolgen kann.

In einem alternativen Ausführungsbeispiel umfassen die Befestigungsmittel eine als Befestigungsring ausgebildete Spannvorrichtung, welche mit dem Mähmesserträger verbunden ist und radial außen um das Verbindungselement spannbar ist. Der Befestigungsring ist beispielsweise als geschlitzter Spannring ausgebildet, der fest mit dem Mähmesserträger verbunden ist oder sogar einteilig mit diesem ausgebildet ist. Der Spannring wird radial außen um das Verbindungselement gelegt und kann beispielsweise über eine Spannschraube mit diesem verspannt werden. Dabei kann der Spannring in axialer Richtung zum Mähmesserantriebszapfen verstellbar angeordnet werden, so dass eine Justierung des Mähmesserantriebszapfens durchführbar ist. Der Befestigungsring kann ebenso als Befestigungsrahmen ausgebildet sein, so dass keine ringförmige sondern eine rahmenförmige Spannvorrichtung ausgebildet wird. Ferner ist es möglich die Spannvorrichtung auch mehrteilig, beispielsweise durch zwei gegenüberliegende und mit Spannschrauben verbundene Bügel auszubilden.

Anhand der Zeichnungen, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

### Es zeigt:

- Fig. 1: eine schematische Querschnittsansicht einer erfindungsgemäßen Verbindungsanordnung,
- Fig. 2: eine weitere schematische Querschnittsansicht der Verbindungsanordnung aus Figur 1,
- Fig. 3: eine schematische Draufsicht des Verbindungselements der Verbindungsanordnung aus Figuren 1 und 2,
- Fig. 4: eine schematische perspektivische Ansicht des Verbindungselements mit einem angeschraubtem Mähmesserträger und

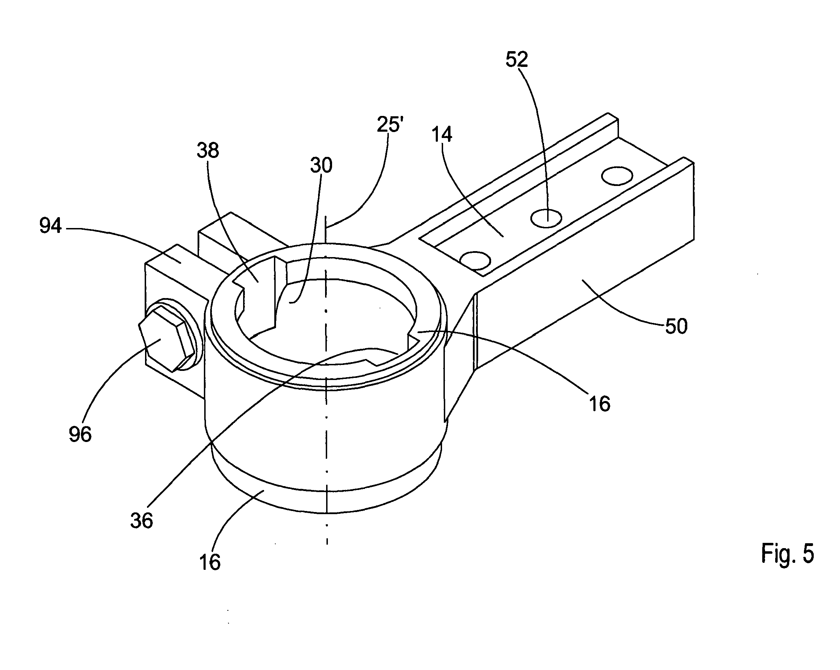

- Fig. 5: eine schematische perspektivische Ansicht des Verbindungselements mit einem aufgespanntem Mähmesserträger als alternative Ausführung.

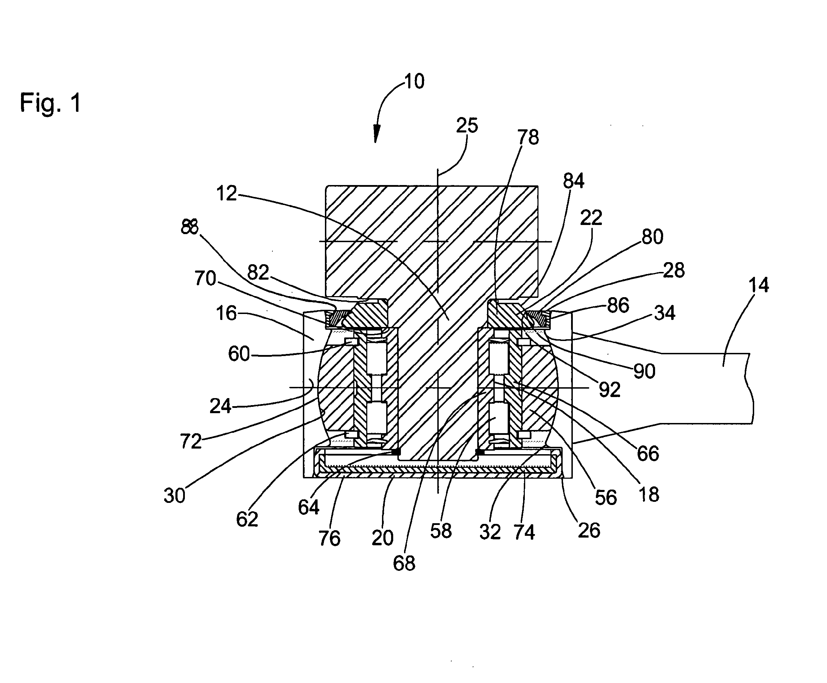

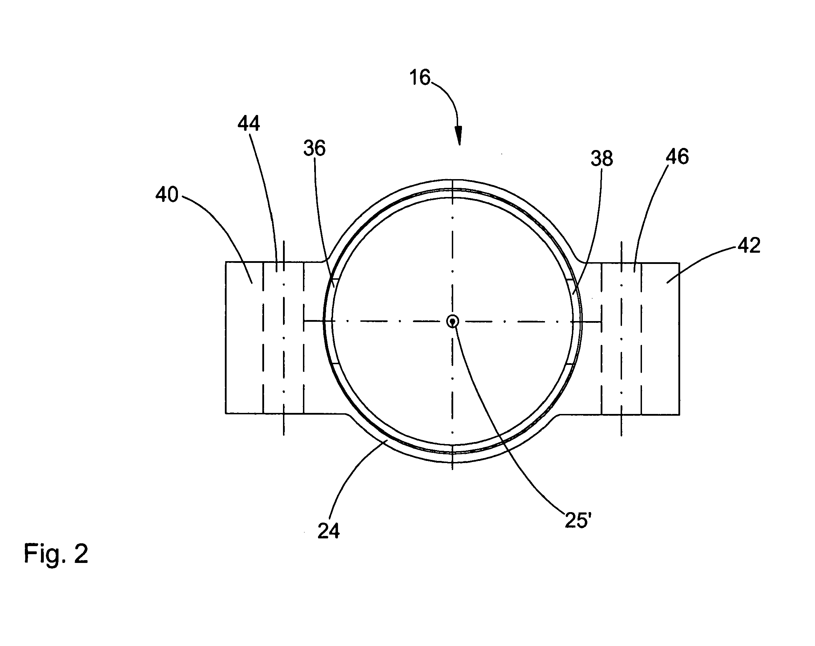

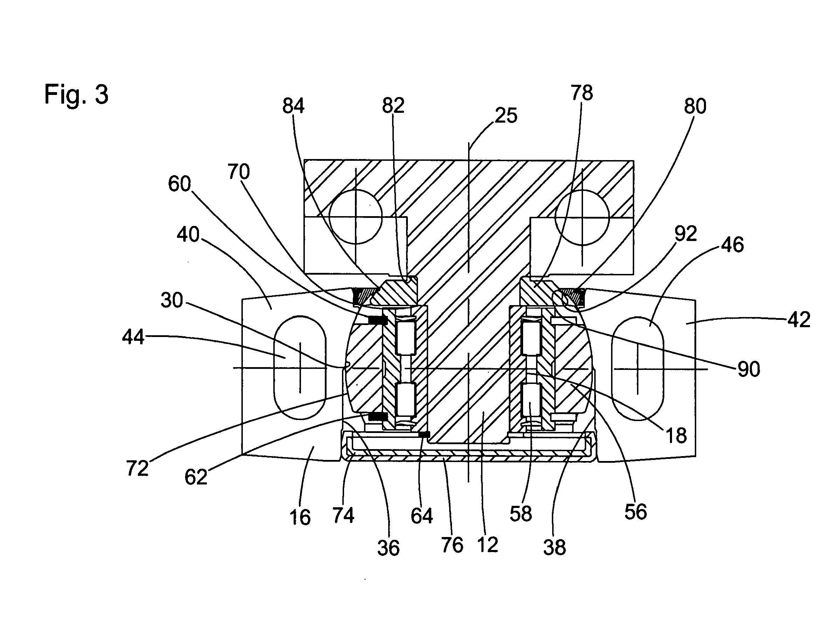

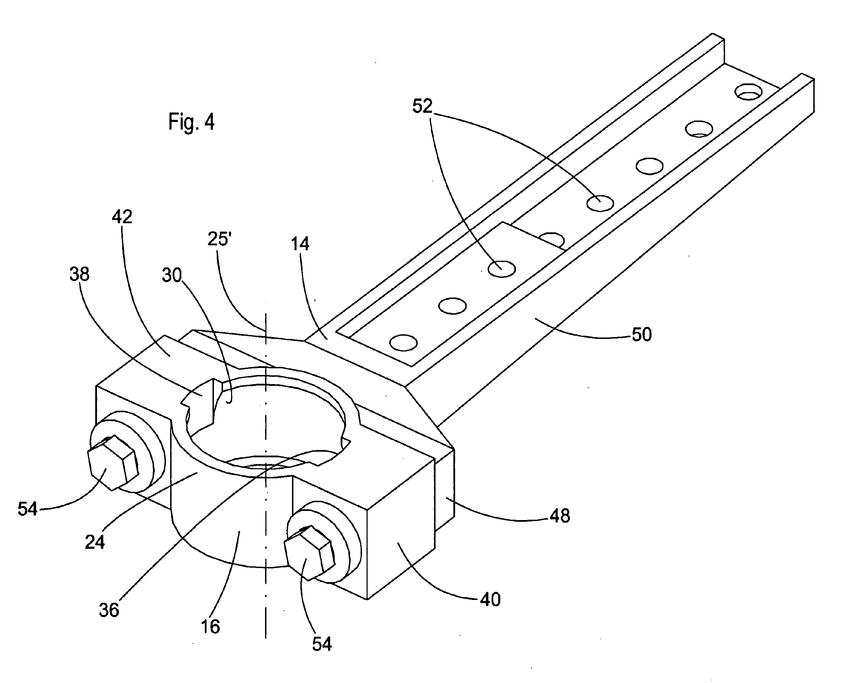

Eine in den Figuren 1 und 2 dargestellte Verbindungsanordnung 10 dient zur Verbindung eines Mähmessers (nicht gezeigt) mit einem Mähmesserantriebszapfen 12. Der Mähmesserantriebszapfen 12 erstreckt sich von einem Exzentertrieb (nicht gezeigt) der beispielsweise in einer Mähvorrichtung oder einem Schneidwerk eines Mähdreschers oder einer anderen landwirtschaftlichen Maschine einsetzbar ist. Über den Exzentertrieb mit Mähmesserantriebszapfen 12 können mittels einer erfindungsgemäßen Verbindungsanordnung 10 Rotationsbewegungen des Mähmesserantriebszapfens 12 in Linearbewegungen für die Schneidbewegung eines mit Mähmesser bestückten Mähmesserträgers 14 überführt werden, wobei der Mähmesserantriebszapfen 12 exzentrische Rotationsbewegungen ausführt, die in eine pendelnde, Linearbewegung des Mähmesserträgers 14 resultieren. Der Mähmesserträger 14 führt dabei lineare Hin- und Herbewegungen aus. Die Verbindungsanordnung 10 umfasst neben einem Mähmesserträger 14 ein Verbindungselement 16, welches in weiteren Details in den Figuren 3 und 4 dargestellt ist. Die Verbindungsanordnung 10 umfasst ferner eine Lageranordnung 18, sowie eine Abdeckung 20 und Dichtmittel 22 zum Abdichten des Verbindungselements 16 gegenüber der Umgebung.

Das Verbindungselement 16 bildet einen über seinen Umfang geschlossenen Lagerring 24 der eine koaxial zur Mittelachse 25 des Mähmesserantriebszapfens 12 ausgerichtete Rotationsachse 25' aufweist. Der Lagerring 24 weist zentrisch zur Rotationsachse 25' ausgerichtete und gegenüberliegende zylindrische Öffnungen 26, 28 auf. Der Lagerring 24 besitzt eine sphärische, kugeloberflächenartige Innenfläche 30, die an den Öffnungen 26, 28 jeweils durch einen Rand 32, 34 begrenzt wird. Der der Öffnung 26 zugeordnete Rand 32 weist um 180° zueinander versetzt angeordnete Ausnehmungen 36 auf, die den Rand 32 unterbrechen und sich axial zur Rotationsachse bis ca. zur Mitte der Innenfläche 30 erstrecken. Die Ausnehmungen 36, 38 sind in den Figuren 2, 3 und 4 zu erkennen. An der Außenseite des Verbindungselements 16 sind seitlich angeordnete Befestigungsflansche 40, 42 vorgesehen, die jeweils Befestigungsmittel 44, 46 in Form von Durchgangsbohrungen, insbesondere Langlochdurchgangsbohrungen aufweisen.

Der Mähmesserträger 14 umfasst einen Befestigungsflansch 48, der vorzugsweise einteilig mit einem Schaft 50 verbunden ist, wobei der Schaft 50 mit mehreren Befestigungsbohrungen 52 zur Befestigung eines oder mehrerer Mähmesser versehen ist. Der am Mähmesserträger 14 ausgebildete Befestigungsflansch 48 ist mit Gewindebohrungen versehen, durch welche er mittels Gewindebolzen 54 mit dem Verbindungselement 16 verbunden ist. Die Gewindebolzen 54 erstrecken sich dabei durch die an den Befestigungsflanschen 40, 42 des Verbindungselements 16 ausgebildeten Langlochbohrungen 44, 46 und stehen mit den am Befestigungsflansch 48 des Mähmesserträgers 14 ausgebildeten Gewindebohrungen in Eingriff.

Die Lageranordnung 18 umfasst eine auf ihrem Umfang geschlossen bzw. ungeschlitzt ausgebildete Lagerbuchse 56, ein Wälzlager 58, sowie entsprechende Sicherungsringe (Sprengringe oder Seegeringe) 60, 62, 64 zur axialen Sicherung der Lagerbuchse 56 am Wälzlager 58 bzw. des Wälzlagers 58 am Mähmesserantriebszapfen 12. Das Wälzlager 58 ist als Zylinderrollenlager mit einem Außenring 66 und einen Innenring 68 ausgebildet, wobei der Innenring 68 mit einer zylindrischen Lagerfläche auf dem Mähmesserantriebszapfen 12 gelagert ist. Der Innenring 68 ist dabei durch einen am Fuße des Mähmesserantriebszapfens 12 ausgebildeten Absatz 70 und den am freiliegenden Ende des Mähmesserantriebszapfens 12 angeordneten Sicherungsring 64 axial festgesetzt. Der Außenring 66 weist eine radial außen zur Rotationsmittelachse 25' angeordnete und zylindrisch ausgebildete Lagerfläche auf, auf der die Lagerbuchse 56 mit einer radial innen zur Rotationsachse 25' angeordneten und zylindrisch ausgebildeten Lagerfläche radial gelagert ist. Die Lagerbuchse 56 wird dabei durch die auf dem Außenring 66 angeordneten Sicherungsringe 60, 62 axial festgesetzt. Die Lagerbuchse 56 weist eine entsprechend der Innenfläche 30 des Lagerrings 24 ausgebildete sphärische, kugeloberflächenartige Außenfläche 72 auf. Die Lagerbuchse ist vorzugsweise aus einem verschleißfesten Kunststoff ausgebildet. Sie kann jedoch auch aus einem metallischen oder keramischen Werkstoff hergestellt sein.

Die Abdeckung 20 umfasst einen kreisrunden Metalldeckel 74, der mit einem gummi- oder kunststoffartigen Überzug 76 beschichtet ist. Die Abmessungen der Abdeckung 20 sind dem Durchmesser der an dem freiliegenden Ende des Mähmesserantriebszapfens 12 angeordneten Öffnung 26 des Verbindungselements 16 derart angepasst, dass die Abdeckung in einer Presspassung an dem Verbindungselement 16 gesichert ist. Hierbei könnte auch eine Gewindeverbindung zwischen Abdeckung 20 und Öffnung 26 vorgesehen werden, wobei gegebenenfalls auf einen Überzug 76 des Metalldeckels 74 verzichtet werden könnte und ein Außengewinde am Metalldeckel 74 direkt mit einem Innengewinde an der Öffnung 26 in Eingriff stünde.

Die Dichtmittel 22 umfassen einen ersten Dichtring 78 und einen zweiten Dichtring 80. Der erste Dichtring 78 ist auf dem Absatz 70 am Fuße des Mähmesserantriebszapfens 12 gelagert und ist zwischen einem weiteren Absatz 82 am Fuße des Mähmesserantriebszapfens 12 und dem Innenring 68 des Wälzlagers 58 axial fixiert. Der erste Dichtring 78 weist eine zylindrische Innenringfläche und eine sphärisch ausgebildete Außenringfläche 84 auf. Vorzugsweise ist der erste Dichtring aus Metall oder Kunststoff hergestellt. Der zweite Dichtring 80 ist zweiteilig aufgebaut und umfasst einen äußeren Metallring 86 in den ein Gummi- oder Kunststoffring 88 eingelassen ist, wobei der zweite Dichtring 80 mit seinem äußeren Metallring 86 in die dem Fuße des Mähmesserantriebszapfens 12 zugewandten Öffnung 28 des Verbindungselements 16 sitzfest eingepasst ist. Der Gummiring 88 weist einen sich radial zur Rotationsachse 25' nach innen erstreckenden Dichtungsrand 90 auf, der sich über die am ersten Dichtring 78 ausgebildete sphärische Außenringfläche 84 legt und einen Überlappungsbereich 92 zwischen ersten und zweiten Dichtring 78, 80 bildet.

Die Montage der Verbindungsanordnung kann folgendermaßen erfolgen: Das Verbindungselement 16 wird zunächst mit der Lagerbuchse 56 bestückt. Dazu wird die Lagerbuchse 56, in einem Winkel von 90° zur Rotationsachse 25' bzw. zum Lagerring 24 gekippt, in die Ausnehmungen 36, 38 am Rand 32 des Lagerrings 24 eingeführt. Durch erneutes Kippen der Lagerbuchse um 90° können die sphärische Außenfläche 72 der Lagerbuchse 56 und die sphärische Innenfläche 30 des Lagerrings 24 zueinander ausgerichtet werden, so dass die Lagerbuchse 56 durch die Ränder 32, 34 am Lagerring 24 axial zur Rotationsachse 25' fixiert wird. Es folgt das Einsetzen des Wälzlagers 58 in die Innenfläche der Lagerbuchse 24 und das Fixieren des Wälzlagers 58 durch Einsetzen der Sicherungsringe 60, 62 an dem Außenring 66 des Wälzlagers 58. Es folgt das Einsetzen der Dichtmittel 22 (erster und zweiter Dichtring 78, 80) in die Öffnung 28 des Verbindungselements 16. Das Verbindungselement 16 kann nun samt Lageranordnung 18 und Dichtmittel 22 auf den Mähmesserantriebszapfen 12 geschoben und über den Sicherungsring 64 am freiliegenden Ende des Mähmesserantriebszapfens 12 axial fixiert werden. Die Öffnung 26 am Verbindungselement 16 kann nun durch Aufsetzen bzw. Einpassen der Abdeckung 20 verschlossen werden, so dass die Lageranordnung 18 gegen Verunreinigungen aus der Umgebung geschützt ist. Der Mähmesserträger 14 wird über die Gewindebolzen 54 an das Verbindungselement 16 geschraubt und kann in seiner relativen axialen Position zur Rotationsachse 25' über die Langlochbohrungen 44, 46 besonders einfach verstellt bzw. justiert werden. Durch die sphärische Ausbildung der Außenfläche 72 der Lagerbuchse 56 bzw. der Innenfläche 30 des Lagerrings 24 ist eine Neigungsstellung zwischen Verbindungselement 16 und Mähmesserantriebszapfen 12 möglich, so dass die eingangs genannten, sich während des Betriebs eines Schneidwerks einstellenden axialen Belastungen für die Lageranordnung 18 reduziert bzw. minimiert werden können. Ferner bieten die Abdeckung 20 und die Dichtmittel 22 die Möglichkeit, die Lageranordnung 18 dauerhaft gegen Verunreinigungen zu schützen, wodurch Wartungsintervalle zum Schmieren der Verbindungsanordnung 10 und Reparaturen aufgrund von Lagerschäden durch Verunreinigungen entfallen bzw. minimiert werden. Im vorliegenden Ausführungsbeispiel ist eine einmalige Schmierung für die gesamte Betriebsdauer der Verbindungsanordnung 10 vorgesehen.

In einer alternativen Ausführungsform der Erfindung sind am Verbindungselement (16) keine als Langlochbohrungen (44, 46) bzw. am Mähmesserträger (14) als Befestigungsflansch (48) ausgebildete Befestigungsmittel vorgesehen. Stattdessen ist der Mähmesserträger (14) mit einem als Spannvorrichtung oder Schelle ausgebildeten Befestigungsring (94) verbunden, der um das Verbindungselement (16) gelegt wird. Der Befestigungsring (94) ist an einer Seite geschlitzt ausgebildet und mit einer Spannschraube (96) versehen. Über die Spannschraube (96) ist der Durchmesser des Befestigungsrings (94) veränderbar, so dass der Befestigungsring (94) um das Verbindungselement (16) gespannt und drehfest mit diesem verbunden wird. Durch leichtes Lösen der Spannschraube (96) bzw. des Befestigungsrings (94) kann die Verbindung zwischen Verbindungselement (16) und Mähmesserantriebszapfen (14) gelockert und der Mähmesserträger (14) in seiner Position axial zum Mähmesserantriebszapfen (12) leicht variiert werden, so dass eine Justierung für den Mähmesserträger (14) erfolgen kann.

Auch wenn die Erfindung lediglich anhand zweier Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Verbindungsanordnung (10) zur Verbindung eines Mähmessers mit einem Mähmesserantriebszapfen (12), mit einem ringförmig ausgebildeten Verbindungselement (16), einer im Verbindungselement (16) aufnehmbaren Lageranordnung (18) zur Lagerung des Verbindungselements (16) an einem Mähmesserantriebszapfen (12) und einem am Verbindungselement (16) befestigbaren Mähmesserträger (14), **dadurch gekennzeichnet, dass** das Verbindungselement (16) über den Umfang unterbrechungsfrei geschlossenen ausgebildet ist und einen zu einer Rotationsachse (25') des Verbindungselements (16) radial innenseitig sphärisch ausgeformten Lagerring (24) formt, wobei die Lageranordnung (18) eine zur Aufnahme in dem Lagerring (24) radial außenseitig sphärisch ausgebildete Lagerbuchse (56) umfasst und Befestigungsmittel (44, 46, 48, 94) zur Befestigung des Mähmesserträgers (14) an das Verbindungselement (16) vorgesehen sind, die radial außenseitig an dem Verbindungselement (16) angreifen.

2. Verbindungsanordnung (10) nach Anspruch 1, **dadurch gekennzeichnet, dass** der Lagerring (24) zum Einsetzen der Lagerbuchse (56) in den Lagerring (24) auf dem Umfang um 180° versetzt angeordnete Ausnehmungen (36, 38) umfasst, die derart ausgebildet sind, dass die Lagerbuchse (56) in einer um 90° zu ihrer Lagerposition gekippten Stellung in den Lagerring (24) einsetzbar ist.

3. Verbindungsanordnung (10) nach Anspruch 1 oder 2, **dadurch gekennzeichnet, dass** die Lageranordnung (18) einen von der Lagerbuchse (56) radial innen aufgenommenen Außenring (66) eines Wälzlagers (58) umfasst.

4. Verbindungsanordnung (10) nach Anspruch 3, **dadurch gekennzeichnet, dass** das Wälzlager (58) auf einem Mähmesserantriebszapfen (12) lagerbar ist.

5. Verbindungsanordnung (10) nach einem der vorhergehenden Ansprüche, **dadurch gekennzeichnet, dass** an dem Verbindungselement (16) eine Abdeckung (20) vorgesehen ist, die den Lagerring (24) an dem freiliegenden Ende eines Mähmesserantriebszapfens (12) relativ zur Rotationsachse (25') axial verschließt und Lageranordnung (18) sowie Mähmesserantriebszapfen (12) gegenüber der Umgebung diesseits des Lagerrings (24) vollständig abdeckbar sind.

6. Verbindungsanordnung (10) nach Anspruch 5, **dadurch gekennzeichnet, dass** Dichtmittel (22) vorgesehen sind, die die Lageranordnung (18) auf der der Abdeckung (20) abgewandten Seite des Lagerrings (24) gegenüber der Umgebung abdichten.

7. Verbindungsanordnung (10) nach Anspruch 6, **dadurch gekennzeichnet, dass** die Dichtmittel (22) einen ersten Dichtring (78) und einen zweiten Dichtring (80) umfassen, wobei der erste Dichtring (78) an einem Mähmesserantriebszapfen (12) halterbar ist und der zweite Dichtring (80) an dem Verbindungselement (16) gehaltert ist, wobei der zweite Dichtring (80) und der erste Dichtring (78) einen gemeinsamen radialen Überlappungsbereich (92) aufweisen.

8. Verbindungsanordnung (10) nach einem der vorhergehenden Ansprüche, **dadurch gekennzeichnet, dass** die Befestigungsmittel (44, 46, 48) Befestigungsbohrungen umfassen, die radial außen an dem Verbindungselement (16) ausgebildet sind.

9. Verbindungsanordnung (10) nach Anspruch 8, **dadurch gekennzeichnet, dass** die Befestigungsmittel (44, 46, 48) einen Befestigungsflansch aufweisen, mit welchem der Mähmesserträger (14) verbunden ist und welcher an die Befestigungsbohrungen (44, 46) am Verbindungselement (16) anschraubbar ist.

10. Verbindungsanordnung (10) nach Anspruch 8 oder 9, **dadurch gekennzeichnet, dass** die Befestigungsbohrungen (44, 46) am Verbindungselement (16) als Langlochbohrungen ausgebildet sind, derart, dass der Mähmesserträger (14) axial zur Rotationsachse (25') des Verbindungselements (16) verstellbar an das Verbindungselement (16) anschraubbar ist.

11. Verbindungsanordnung (10) nach einem der Ansprüche 1 bis 7, **dadurch gekennzeichnet, dass** die Befestigungsmittel (94) eine Spannvorrichtung, insbesondere einen Befestigungsring, umfassen, welche mit dem Mähmesserträger (14) verbunden ist und radial außen um das Verbindungselement (16) spannbar ist, derart, dass der Mähmesserträger (14) axial zur Rotationsachse (25') des Verbindungselements (16) verstellbar an das Verbindungselement (16) spannbar ist.

## Claims

1. Connecting arrangement (10) for connecting a mowing knife to a mowing knife drive journal (12), having an annularly configured connecting element (16), a bearing arrangement (18), receivable in the connecting element (16), for mounting of the connecting element (16) on a mowing knife drive journal (12), and a mowing knife carrier (14) attachable to the connecting element (16), **characterized in that** the connecting element (16) is configured such that it is uninterruptedly closed over the periphery and forms a bearing ring (24) which radially on the inside is spherically shaped relative to a rotation axis (25') of the connecting element (16), the bearing arrangement (18) comprising a bearing bushing (56) which radially on the outside is spherically configured for reception in the bearing ring (24) and, for the fastening of the mowing knife carrier (14) to the connecting element (16), fastening means (44, 46, 48, 94) being provided, which engage on the connecting element (16) radially on the outside.

2. Connecting arrangement (10) according to Claim 1, **characterized in that** the bearing ring (24) comprises, for the insertion of the bearing bushing (56) into the bearing ring (24), recesses (36, 38) arranged offset by 180° on the periphery, which recesses are configured such that the bearing bushing (56) can be inserted into the bearing ring (24) in a position which is tilted by 90° relative to its bearing position.

3. Connecting arrangement (10) according to Claim 1 or 2, **characterized in that** the bearing arrangement (18) comprises an outer ring (66) of a rolling bearing (58), which is received radially on the inside by the bearing bushing (56).

4. Connecting arrangement (10) according to Claim 3, **characterized in that** the rolling bearing (58) is mountable on a mowing knife drive journal (12).

5. Connecting arrangement (10) according to one of the preceding claims, **characterized in that** on the connecting element (16) a cover (20) is provided, which axially closes off the bearing ring (24) at the free end of a mowing knife drive journal (12) relative to the rotation axis (25') and fully covers the bearing arrangement (18) and the mowing knife drive journal (12) from the environment on the near side of the bearing ring (24).

6. Connecting arrangement (10) according to Claim 5, **characterized in that** sealing means (22) are provided, which seal off the bearing arrangement (18) against the environment on that side of the bearing ring (24) facing away from the cover (20).

7. Connecting arrangement (10) according to Claim 6, **characterized in that** the sealing means (22) comprise a first sealing ring (78) and a second sealing ring (80), the first sealing ring (78) being supportable on a mowing knife drive journal (12) and the second sealing ring (80) being supported on the connecting element (16), the second sealing ring (80) and the first sealing ring (78) having a common radial overlap region (92).

8. Connecting arrangement (10) according to one of the preceding claims, **characterized in that** the fastening means (44, 46, 48) comprise mounting bores, which are configured on the connecting element (16) radially on the outside.

9. Connecting arrangement (10) according to Claim 8, **characterized in that** the fastening means (44, 46, 48) have a mounting flange, to which the mowing knife carrier (14) is connected and which can be bolted onto the mounting bores (44, 46) on the connecting element (16).

10. Connecting arrangement (10) according to Claim 8 or 9, **characterized in that** the mounting bores (44, 46) on the connecting element (16) are configured as long-hole bores, such that the mowing knife carrier (14) can be bolted onto the connecting element (16) such that it is adjustable axially to the rotation axis (25') of the connecting element (16).

11. Connecting arrangement (10) according to one of Claims 1 to 7, **characterized in that** the fastening means (94) comprise a clamping device, in particular a mounting ring, which is connected to the mowing knife carrier (14) and can be clamped around the connecting element (16) radially on the outside such that the mowing knife carrier (14) can be clamped to the connecting element (16) so as to be adjustable axially to the rotation axis (25') of the connecting element (16).

## Revendications

1. Dispositif de liaison (10) destiné à la liaison d'une lame de fauchage à une cheville d'entraînement de lame de fauchage (12), comprenant un élément de liaison (16) réalisé sous forme annulaire, un ensemble de palier (18) pouvant être reçu dans l'élément de liaison (16) pour le support sur palier de l'élément de liaison (16) sur une cheville d'entraînement de lame de fauchage (12) et un support de lame de fauchage (14) pouvant être fixé à l'élément de liaison (16), **caractérisé en ce que** l'élément de liaison (16) est réalisé de manière fermée sans interruption sur la périphérie et forme une bague de palier (24) formée de manière sphérique radialement du côté intérieur par rapport à un axe de rotation (25') de l'élément de liaison (16), l'ensemble de palier (18) comportant une douille de palier (56) réalisée de manière sphérique radialement du côté extérieur par rapport au logement dans la bague de palier (24), et des moyens de fixation (44, 46, 48, 94) étant prévus pour la fixation du support de lame de fauchage (14) sur l'élément de liaison (16), lesquels moyens de fixation viennent en prise radialement du côté extérieur sur l'élément de liaison (16).

2. Dispositif de liaison (10) selon la revendication 1, **caractérisé en ce que** la bague de palier (24) comporte, pour l'insertion de la douille de palier (56) dans la bague de palier (24), des évidements (36, 38) disposés de manière décalée de 180° sur la périphérie, lesquels sont réalisés de telle sorte que la douille de palier (56) puisse être insérée dans la bague de palier (24) dans une position inclinée de 90° par rapport à sa position de palier.

3. Dispositif de liaison (10) selon la revendication 1 ou 2, **caractérisé en ce que** l'ensemble de palier (18) comporte une bague extérieure (66) d'un palier à roulement (58) reçue radialement à l'intérieur par la douille de palier (56).

4. Dispositif de liaison (10) selon la revendication 3, **caractérisé en ce que** le palier à roulement (58) peut être monté sur une cheville d'entraînement de lame de fauchage (12).

5. Dispositif de liaison (10) selon l'une quelconque des revendications précédentes, **caractérisé en ce qu'**un couvercle (20) est prévu sur l'élément de liaison (16), lequel couvercle ferme axialement la bague de palier (24) à l'extrémité libre d'une cheville d'entraînement de lame de fauchage (12) par rapport à l'axe de rotation (25'), et recouvre complètement l'ensemble de palier (18) ainsi que la cheville d'entraînement de lame de fauchage (12) par rapport à l'environnement de ce côté de la bague de palier (24).

6. Dispositif de liaison (10) selon la revendication 5, **caractérisé en ce que** des moyens d'étanchéité (22) sont prévus, lesquels réalisent l'étanchéité de l'ensemble de palier (18) par rapport à l'environnement sur le côté de la bague de palier (24) opposé au couvercle (20).

7. Dispositif de liaison (10) selon la revendication 6, **caractérisé en ce que** les moyens d'étanchéité (22) comportent une première bague d'étanchéité (78) et une deuxième bague d'étanchéité (80), la première bague d'étanchéité (78) pouvant être supportée sur une cheville d'entraînement de lame de fauchage (12) et la deuxième bague d'étanchéité (80) étant supportée sur l'élément de liaison (16), la deuxième bague d'étanchéité (80) et la première bague d'étanchéité (78) comprenant une région de chevauchement (92) radiale commune.

8. Dispositif de liaison (10) selon l'une quelconque des revendications précédentes, **caractérisé en ce que** les moyens de fixation (44, 46, 48) comportent des alésages de fixation qui sont réalisés radialement à l'extérieur sur l'élément de liaison (16).

9. Dispositif de liaison (10) selon la revendication 8, **caractérisé en ce que** les moyens de fixation (44, 46, 48) comprennent une bride de fixation à laquelle le support de lame de fauchage (14) est relié, et laquelle peut être vissée sur les alésages de fixation (44, 46) sur l'élément de liaison (16).

10. Dispositif de liaison (10) selon la revendication 8 ou 9, **caractérisé en ce que** les alésages de fixation (44, 46) sur l'élément de liaison (16) sont réalisés sous forme d'alésages oblongs, de telle sorte que le support de lame de fauchage (14) puisse être vissé sur l'élément de liaison (16) de manière déplaçable axialement par rapport à l'axe de rotation (25') de l'élément de liaison (16).

11. Dispositif de liaison (10) selon l'une quelconque des revendications 1 à 7, **caractérisé en ce que** les moyens de fixation (94) comportent un dispositif de serrage, en particulier une bague de fixation, lequel est relié au support de lame de fauchage (14) et peut être serré radialement à l'extérieur autour de l'élément de liaison (16), de telle sorte que le support de lame de fauchage (14) puisse être serré sur l'élément de liaison (16) de manière déplaçable axialement par rapport à l'axe de rotation (25') de l'élément de liaison (16).
